# EUROPEAN PATENT SPECIFICATION

(11) **EP 4 575 860 B1**
(45) Date of publication and mention of the grant of the patent: **29.07.2026**
(21) Application number: 23307331.1
(22) Date of filing: 21.12.2023
(51) Int. Cl.: G06F 21/57, G11C 16/10

(54) **METHOD FOR WRITING DATA IN A NON-VOLATILE MEMORY OF AN INTEGRATED CIRCUIT OF A SECURITY DEVICE**
VERFAHREN ZUM SCHREIBEN VON DATEN IN EINEN NICHTFLÜCHTIGEN SPEICHER EINER INTEGRIERTEN SCHALTUNG EINER SICHERHEITSVORRICHTUNG
PROCÉDÉ D'ÉCRITURE DE DONNÉES DANS UNE MÉMOIRE NON VOLATILE D'UN CIRCUIT INTÉGRÉ D'UN DISPOSITIF DE SÉCURITÉ

(43) Date of publication of application: 25.06.2025
(73) Proprietor: IDEMIA France, 92400 Courbevoie (FR)
(72) Inventor: MISHRA, Harshit, 92400 Courbevoie (FR); BOLKIAH, Suhaily Hassanal, 92400 Courbevoie (FR)
(74) Representative: Idemia

(56) References cited:
- EP-A1- 0 645 046
- EP-B1- 0 645 046
- US-A1- 2005 201 177

## Description

### Field of the Invention

The present invention relates to the field of security devices embedding integrated circuits. More particularly, the present invention relates to a method for writing data into a non-volatile memory of an integrated circuit of a security device and, also, to a security device, a computer program, and a recording medium. The present invention is particularly advantageous for protecting an integrated circuit card (in other words a smart card) from tearing, but such an application is only given as an illustrative example and should not limit the invention.

### Background of the Invention

The invention lies in particular in the context of security devices with embedded integrated circuits using non-volatile memories, such as flash memories. Hereinafter, a security device refers to an integrated circuit card (e.g. a license, an identity card, a payment card, a badge, a telecoms card (e.g. SIM (for "Subscriber Identity Module") card, UICC (for "Universal Identity Circuit Card"), eUICC (for "embedded UICC"), iUICC (for "integrated UICC"), or a security document embedded with an integrated circuit (e.g. a passport). In addition, we refer to a contiguous block of memory as a memory sector and, more specifically, each memory sector is associated with a unique address and stores sector data.

In this context, in order to write data in a memory sector of the non-volatile memory of an integrated circuit, for example to record data relating to a transaction or to update a PIN (for Personal Identification Number) code, it is first necessary to erase the memory sector. Specifically, the erase operation logically sets the bits of the memory sector to 1 (i.e. the erased state), and then the write operation logically sets some of the bits of the memory sector to 0 (i.e. the programmed state).

For security devices, such as an integrated circuit card or a security document with embedded an integrated circuit, the power supply can be cut off while writing data in the non-volatile memory. Indeed, these security devices are powered by readers using the device connectors (contact mode) or induction (contact-less mode). Hence, if the card is removed (contact mode) or moved away (contactless mode) from the reader by the cardholder, or if a power failure occurs, the power supply of the security device will be cut off. Such abrupt power cuts are referred to as tearing.

In particular, if a tearing occurs while data is being written into the non-volatile memory of an integrated circuit, this may lead to a data loss. For example, if the power supply is cut off between the erase operation and the writing operation, the data originally stored in the memory sector will be erased and the data to be written will not yet be stored in the memory sector.

More generally, tearing may further result in data corruption in the non-volatile memory of the integrated circuit or even in the inability to boot its operating system. Thereby, tearing may produce unpredictable behaviors of the security device and negatively impact its lifespan.

One of the existing solutions to overcome the problems associated with tearing events consists in backing-up the new data to be written in the non-volatile memory before updating a target page. Then, upon power-up of the integrated circuit, the backed-up data is restored if it differs from the content of the target page. However, such a solution is not sufficiently reliable and can lead to memory corruptions in certain cases of tearing. For example, if a tearing event occurs while creating the back-up, this can lead to memory corruption since it is not possible to determine whether the data has been fully or partially backed-up, or even whether the back-up memory includes a weak memory cell (i.e. a worn out cell). An existing solution is disclosed in EP0645046.

Therefore, there exists a need for a solution for reliably writing data into a non-volatile memory of an integrated circuit of a security device, and in particular that protects the content of the non-volatile memory from tearing events.

The present invention has been made in the light of the above problems.

### Summary of the Invention

According to an aspect, the present invention provides a method for writing updating data into a non-volatile memory of an integrated circuit of a security device, the non-volatile memory comprising memory sectors, buffer sectors and flag slots, said method comprising:
- a writing process executed to update a target memory sector of the memory sectors with the updating data, wherein the writing process comprises prior to updating the target memory sector:
   ∘ writing updated memory sector data of the target memory sector into a current buffer sector of the buffer sectors, the updated memory sector data of the target memory sector being obtained based on the updating data; and
   ∘ writing the address of the target memory sector into a current flag slot of the flag slots associated with the current buffer sector.

In the proposed method, prior to updating a target memory sector, and thus prior to erasing it, the updated data of the target memory sector and its address are backed-up in the non-volatile memory. Thereby, the proposed method ensures that if a power cut occurs during the writing process, the non-volatile memory preserves either the initial data of the target memory sector, or the updated memory sector data to be written into the target memory sector as well as the address of the target memory sector.

The present invention hence provides a reliable solution for writing data into a non-volatile memory of an integrated circuit of a security device, protecting the content of the non-volatile memory from tearing events.

According to a particular embodiment, the updating of the target memory sector comprises:
- erasing the target memory sector;
- writing the updated memory sector data into the target memory sector; and
- writing an updating completion indicator into the current flag slot.

This embodiment proposes, once the writing of the updated memory sector data into the target memory sector is completed, saving an updating completion indicator in the flag slot containing the address of the target memory sector. The updating completion indicator indicates that the update of the target memory sector has been completed. As such, if a tearing event occurs during the writing process, it is possible to determine with certainty whether the target memory sector has been updated or not.

This embodiment allows monitoring accurately the updating of the target memory sector and contributes to improving the reliability of the proposed method for writing data into the non-volatile memory.

According to a particular embodiment, the method further comprises a recovery process executed upon the integrated circuit powering-up, wherein the recovery process comprises:
- verifying whether the current flag slot of the last writing process includes the address of the target memory sector and no updating completion indicator; and
- if the result of this verification is positive:
   ∘ erasing the target memory sector;
   ∘ writing the updated memory sector data into the target memory sector, the updated memory sector data being stored into the current buffer sector associated to the current flag slot; and
   ∘ writing an updating completion indicator into the current flag slot.

In this embodiment, it is proposed to verify, upon power-up of the integrated circuit, whether the flag slot used in the last execution of the writing process includes the address of the target memory sector but no updating completion indicator. In other words, it is checked whether some updated memory sector data has been backed-up in the current buffer sector and whether the update of the target memory sector is incomplete. In this case, the proposed method completes the update of the target memory sector, by copying the content of the current buffer sector into the target memory sector.

Hence, this embodiment allows restoring the content of the non-volatile memory following a tearing event.

According to a particular embodiment, in the writing process, the writing of the address of the target memory sector comprises: writing the address of the target memory sector and the one's complement of the address of the target memory sector into the current flag slot.

According to this particular embodiment, in the recovery process, the verifying of whether the current flag slot includes the address of the target memory sector comprises: verifying whether the current flag slot comprises the address of the target memory sector and its one's complement.

As previously indicated, the address of the target memory sector is written in the flag slot once the updated memory sector data have been successfully backed-up in the buffer. Further, this embodiment proposes saving in the flag slot not only the address of the target memory sector address but also its one's complement, to confirm that the updated memory sector data has been backed-up.

This embodiment allows the target memory sector address to be saved redundantly in the flag slot. It thus provides means to check the validity of the target memory sector address saved in the flag slot.

Accordingly, before restoring backed-up data, this embodiment ensures that the address of the target memory sector saved in a flag slot is valid and that the flag slot includes no weak cell (i.e. that the flag slot effectively stores the address and its one's complement).

Therefore, this embodiment contributes to enhancing the reliability of the proposed method for writing data into the non-volatile memory of the integrated circuit.

According to a particular embodiment, the writing process comprises:
- if the writing of the address of the target memory sector into the current flag slot triggers a fault:
   ∘ writing an updating completion indicator into the current flag slot, a next flag slot of the flag slots and a next buffer sector of the buffer sectors being subsequently defined as the current flag slot and the current buffer sector;
   ∘ writing the updated memory sector data of the target memory sector into the current buffer sector; and
   ∘ writing the address of the target memory sector into the current flag slot.

In this embodiment, if the current flag slot contains a weak memory cell (i.e. a worn-out cell) such that it is not possible to save the address of target memory sector in the current flag slot, then the address of the target memory sector is saved in the next flag slot. Similarly, the updated memory sector data of the target memory sector are saved in the next buffer sector.

This embodiment allows handling a fault (i.e. a weak memory cell issue) when saving the address of the target memory sector. Thereby, it ensures that the address of the target memory sector is effectively saved in the flag slot and contributes to improving the reliability of the proposed solution for writing data into a non-volatile memory.

According to a particular embodiment, the method further comprises an erasure process of the flag slots, wherein the erasure process comprises:
- writing an erasure start indicator into a first flag slot;
- erasing the flag slots; and
- writing an erasure completion indicator into the first flag slot.

This embodiment allows setting the flag slots into an erased state for following writing processes. Thanks to this embodiment, it is not necessary, during the writing process, to erase the current flag slot for saving the address of the target memory sector. This embodiment thus contributes to reducing the processing time of the writing process.

In addition, this embodiment is advantageous in that it allows precisely monitoring the erasure process. The erasure start indicator indicates that the erasure process has started; and the erasure completion indicator indicates that the erasure process has been completed. These indicators allow determining with certainty whether a power-cut occurred during the erasure process and, thus, whether the erasure process has been completed or not.

According to a particular embodiment, the writing process comprises:
- verifying whether the flag slots from the second to the last are filled; and
- if the result of this verification is positive, triggering an execution of the erasure process.

This embodiment allows using a predefined number of buffer sectors for backing-up the address of the target memory sector and the updated memory sector data. Thus, it allows limiting the amount of memory required for writing reliably into the non-volatile memory.

In addition, this embodiment allows reducing the processing time of the writing process. Indeed, saving the address of the target memory sector involves erasing the flag slots only when the flag slots (from the second to the last) are filled, and not every time a target memory sector is updated.

According to a particular embodiment, the recovery process comprises:
- verifying if the first flag slot includes only the erasure completion indicator; and
- if the result of this verification is negative, triggering an execution of the erasure process.

In this embodiment, it is proposed to execute the erasure process for setting the flag slots into an erased state, if the first flag slot does not contain only the erasure completion indicator. In fact, if the first flag slot does not contain only the erasure completion indicator, it implies that a tearing occurred during the previous erasure process (i.e. uncomplete erasure process) or that the flag slots have been corrupted.

Thereby, this embodiment allows restoring the flag slots following a tearing event and contributes to the reliability of the proposed method.

According to a particular embodiment, the writing process comprises, prior to the writing of the updated memory sector data into the current buffer sector: erasing only the current buffer sector.

According to this embodiment, when a the target memory sector is updated, only the current buffer sector is erased to back-up the updated memory sector data, and not all buffer sectors.

This embodiment presents two main advantages. First, it allows reducing the processing time of the writing process. Erasing only the current buffer sector during the writing process is much faster than erasing all the buffer sectors at once.

Second, it allows extending the lifespan of the non-volatile memory and therefore the lifespan of the security device. Indeed, erasing all buffer sectors at once can increase the risks of weak memory cell issues (i.e. worn out cells), which is prevented in this embodiment by erasing only the current buffer sector when updating the target memory sector.

The buffer sectors and the flag slots of the non-volatile memory are linearly indexed, the buffer sectors being respectively associated with flag slots.

This embodiment allows establishing a mapping between the flag slots and the buffer sectors. Specifically, by linearly indexing the flag slots and the buffer sectors and associating them together, this embodiment provides a memory structure with a low-complexity implementation for backing-up the address of the target memory sector and the updated memory sector data.

Hence, this embodiment provides a low-complexity and reliable solution for writing data into a non-volatile memory.

According to a particular embodiment, upon writing an updating completion indicator into the current flag slot, a next flag slot of the flag slots and a next buffer sector of the buffer sectors are defined as the current flag slot and buffer sector for a subsequent writing process (for example, an execution of the writing process performed afterwards).

According to this embodiment, once the target memory sector is updated, the current flag slot is moved to a next one, and similarly for the current buffer sector. In other words, the index pointing to the current flag slot and the current buffer sector is incremented upon completion of the target memory sector update. Then, for the subsequent writing process, the next flag slot and next buffer sector will respectively be used to back-up the address of the target memory sector and the updated memory sector data.

In particular, this embodiment provides a low-complexity solution for backing-up the addresses of the target memory sectors and the updated memory sector data of multiple executions of the writing process. This embodiment is therefore advantageous in terms of the resources required (processing time, memory) for reliably writing data into the non-volatile memory.

According to a particular embodiment, the recovery process comprises: locating the current flag slot of the last writing process by scanning linearly the flag slots, the current flag slot being the flag slot with the largest index and which is not in an erased state or empty.

As previously indicated, each time the update of a target memory sector is completed, the current flag slot is moved to the next one. It follows that scanning linearly the flag slots to locate the flag slot with the largest index and which is not in an erased state allows identifying the most recently used flag slot.

This embodiment hence allows identifying the flag slot used during the last execution of the writing process (i.e. corresponding to the last writing process) and is particularly advantageous in that it presents a low-complexity. Thereby, it contributes to providing a low-complexity solution for writing reliably updating data into a non-volatile memory.

It should be noted that the proposed method may comprise one or more iterations of each of its steps. In particular, the proposed may comprise one or more iterations (i.e. executions) of the writing process, and potentially one or more iterations (i.e. executions) of the recovery process, and/or the erasure process.

According to another aspect, the present invention provides an integrated circuit comprising a processor and a non-volatile memory having stored thereon a program for implementing a method conforming to the invention.

According to another aspect, the present invention provides a security device comprising an integrated circuit conforming to the invention.

In particular, the security device can be an integrated circuit card (i.e. a smart card) or a security document embedded with an integrated circuit.

According to another aspect, the present invention provides a computer program comprising instructions to implement a method conforming to the invention, when the program is executed by at least one processor or a computer.

It should be noted that the computer program referred to here may use any programming language, and be in the form of source code, object code, or code intermediate between source code and object code, such as in a partially compiled form, or in any other desirable form.

According to another aspect, the present invention provides a computer-readable medium having stored thereon a computer program conforming to the invention.

The computer-readable medium referred to in this statement may be any entity or device capable of storing the program and readable by any computer equipment, including a computer. For example, the medium may include a storage medium, or a magnetic storage medium, such as a hard drive. Alternatively, the storage medium may correspond to a computer integrated circuit in which the program is incorporated and adapted to execute a method conforming to the invention or to be used in the execution of such method.

It should be emphasized that the proposed security device, computer program, and computer-readable medium present the advantages described above in relation to the proposed method for writing data into a non-volatile memory.

### Brief Description of the Drawings

Further features and advantages of the present invention will become apparent from the following description of certain embodiments thereof, given by way of illustration only, not limitation, with reference to the accompanying drawings in which:
FIG. 1 illustrates the architecture of the integrated circuit of a security device according to an embodiment of the invention;
FIG. 2 illustrates the structure of the non-volatile memory of an integrated circuit according to an embodiment of the invention;
FIG. 3 illustrates an example mapping of the non-volatile memory of an integrated circuit according to an embodiment of the invention;
FIG. 4 illustrates steps of a writing process of a method for writing data in a non-volatile memory according to an embodiment of the invention;
FIG. 5 illustrates steps of a recovery process of a method for writing data in a non-volatile memory according to an embodiment of the invention; and
FIG. 6 illustrates steps of an erasure process of a method for writing data in a non-volatile memory according to an embodiment of the invention.

### Detailed Description of Example Embodiments

Embodiments of the present invention provide a method for reliably writing data into a non-volatile memory of an integrated circuit of a security device. More specifically, embodiments of the present invention seek to protect the content of the non-volatile memory of the security device from tearing events.

The present invention applies, in particular, to non-volatile memories embedded into integrated circuit cards. The following description of the invention will refer to this particular application, which is provided only as an illustrative example and should not limit the invention. In addition, the present invention further applies to security documents using integrated circuits.

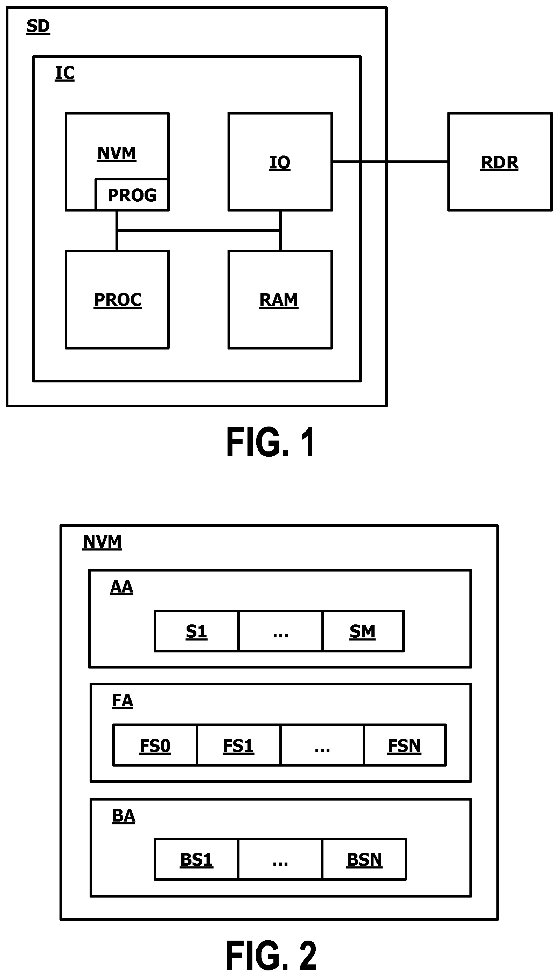

**FIG. 1** illustrates the architecture of the integrated circuit of a security device according to an embodiment of the invention. In particular, this figure is described hereafter to introduce the context of the invention and provide example applications.

The security device SD of FIG. 1 comprises an embedded integrated circuit IC. In addition, the security device SD includes physical connectors and/or an antenna (not represented on the figure) to communicate with a reader RDR in contact mode or contactless mode.

As previously mentioned, the security device SD can be an integrated circuit card (e.g. a license, an identity card, a payment card, a badge, a telecoms card (e.g. SIM (for "Subscriber Identity Module") card, UICC (for "Universal Identity Circuit Card"), eUICC (for "embedded UICC"), iUICC (for "integrated UICC")), or a security document embedded with an integrated circuit (e.g. a passport).

The integrated circuit IC comprises according to the embodiment of FIG. 1: a processor PROC; a volatile memory RAM; a non-volatile memory NVM; and a communication interface IO.

The communication interface IO is configured to connect the integrated circuit IC to a reader RDR. For example, the security device SD may be a payment card and the reader RDR a payment terminal. The interface IO is hence configured to enable communication between the reader RDR and the integrated circuit IC, and also to enable the reader RDR to power the security device integrated circuit. No limitation is attached to the nature of the communication interface, which can use connectors or be wireless, and can implement any protocol known to the skilled person.

When the integrated circuit IC is powered by the reader RDR, the processor PROC is capable of executing instructions and performing processing operations: data communications, computations, cryptographic operations, etc. Typically, the integrated circuit IC includes a read-only memory having stored thereon instructions causing the implementation of an operating system.

More specifically, the non-volatile memory NVM is an electrically erasable and programmable non-volatile memory and constitutes a storage medium conforming to the invention. The memory NVM is readable by processor PROC and stores a computer program PROG conforming to the invention. The computer program PROG comprises instructions which, when the program PROG is executed by the processor PROC, cause the processor to implement a method conforming to the invention.

In addition, the non-volatile memory NVM is used to store application data, for instance a PIN code, recorded transactions, cryptographic keys, biometric data, etc. Particularly, the application data stored in the NVM can be written or updated on command of the reader RDR or upon communication with it. For example, data can be written or updated in the non-volatile NVM memory to record a completed transaction, to update a PIN code, or to store a cryptographic key.

Writing data in the non-volatile memory NVM requires, as previously discussed, first erasing a target memory sector and then writing the data into it. Typically, the data to be written into the target memory sector is cached in the volatile memory RAM during the erasure of the target memory sector.

Still, the security device SD is powered by the reader RDR and the power supply can be cut off, for instance if the user of the security device SD tears it from the reader RDR or moves the device SD away from the electromagnetic field of the reader RDR, or for instance if a power failure occurs. We refer hereinafter to such a power cut as a tearing event.

The present invention provides a reliable solution for writing data into a non-volatile memory of an integrated circuit of a security device, protecting the content of the non-volatile memory from tearing events. In particular, the present invention ensures that if a tearing occurs while writing data into the non-volatile memory NVM, either the initial data of the target memory sector or the data to be written in the target memory sector are preserved in the non-volatile memory NVM.

In addition, the proposed solution further allows monitoring accurately the writing of data into the non-volatile memory. As such, if a tearing occurs, it is possible to determine with certainty whether the writing of data into the non-volatile memory has been completed or not. It should be noted that the proposed solution is advantageous in terms of the resources required (amount of memory, processing time, etc.) to reliably write data into the non-volatile memory NVM.

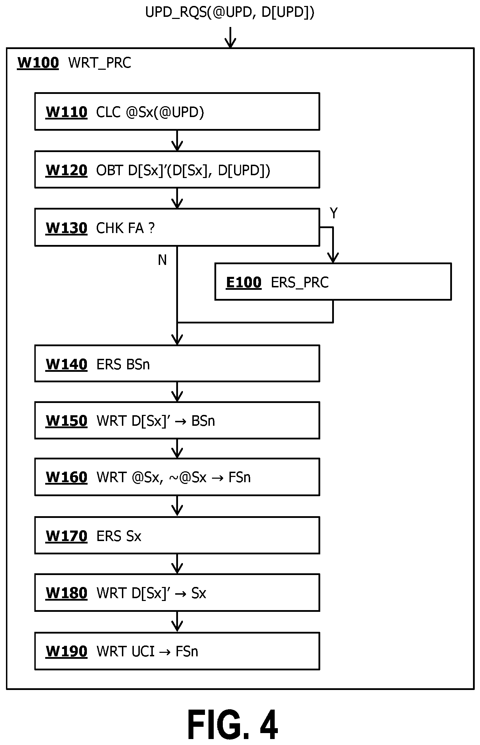

Furthermore, the present invention relies on a proposed structure of the non-volatile memory NVM illustrated in FIG. 2-3 and on a proposed method illustrated in FIG. 4-6.

**FIG. 2** illustrates the structure of the non-volatile memory of an integrated circuit according to an embodiment of the invention. Specifically, this figure further details the structure of the non-volatile memory NVM embedded within the security device SD of FIG. 1.

The non-volatile memory NVM is an electrically erasable and programmable non-volatile memory, for instance a flash memory. The non-volatile memory NVM comprises a plurality of sectors (i.e. contiguous blocks of memory). Specifically, each memory sector is associated with a unique address and stores sector data.

According to a particular embodiment, the size of a sector is fixed. Fixed-length sectors can also be referred to as pages. For instance, the size of a sector (page) can be 128, 256, 512 bytes, depending on the different hardware implementations.

Each sector includes multiple binary words. For instance, the size of a word can be 1, 2 or 4 bytes depending on the different hardware implementations. Each word has a unique address, which consists of the address of the sector and the offset of the word.

Typically, for a flash memory, the erase operation is performed per page, while the write operation is performed per binary word (also referred to as a write unit). If the binary word is not in an erased state or contains a weak memory cell (i.e. a worn-out and unusable cell), a hardware fault will be triggered while writing into it.

As previously mentioned, the present invention is based on a particular structure of the non-volatile memory NVM. As shown in FIG. 2, the non-volatile memory NVM comprises: an application area AA; a flag area FA; and a buffer area BA.

The application area AA comprises memory sectors S1-SM and is used to store application data, such as biometric data, a PIN code, recorded transactions, etc.

Accordingly, when the integrated circuit IC is required to write data into the non-volatile memory NVM, it updates a target memory sector comprised in the memory sectors S1-SM. Hereinafter, we note Sx the target memory sector to be updated. Also, @Sx denotes the address of the target memory sector Sx, D[Sx] the initial sector data stored into the target memory sector Sx, and D[Sx]' the updated memory sector data to be written into the target memory sector Sx.

The flag area FA comprises flag slots FS0-FSN. Flag slots FS1-FSN are used to store monitoring information related to the updates of memory sectors S1-SM. Flag slot FS0 is used to store monitoring information related to the erasure process of the flag slots FS1-FSN, and thus monitoring that the flag area FA is not corrupted.

More precisely, and as detailed hereafter in relation to FIG. 4-6, the flag slots FS1-FSN are respectively used to save the address @Sx of the target memory sector Sx to be updated. In addition, the flag slots FS1-FSN are also used to store updating completion indicators, which indicate that the update of a target memory sector Sx has been completed.

The buffer area BA comprises buffer sectors BS1-BSN and is used to store backups of data to be written in the memory sectors S1-SM.

As further described below, the buffer sectors BS1-BSN are respectively used to store the updated memory sector data D[Sx]' to be written into the target memory sector Sx. The updated memory sector data D[Sx]' is backed-up prior to updating the target memory sector Sx, and thus prior to erasing it.

It should be noted that the buffer sectors BS1-BSN and the flag slots FS0-FSN are linearly indexed. In addition, each one of the buffer sectors BS1-BSN is respectively associated to one of the flag slots FS1-FSN.

The proposed solution uses an index n to point to a flag slot FSn and a buffer sector BSn which are associated together and used when updating a target memory sector Sx. Hereafter, we refer to the flag slot FSn and the associated buffer sector BSn used to update a target memory sector Sx as the current flag slot and the current buffer sector.

Once the update of a target memory sector Sx is completed, the index n is incremented. In this way, the next flag slot will be used as the current flag slot for the next update of a memory sector, and similarly the next buffer sector will be used as the current buffer sector.

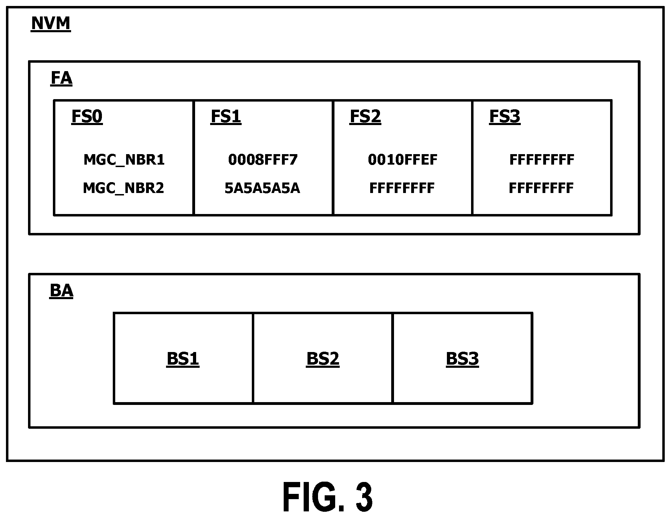

The proposed memory structure of the non-volatile memory NVM is illustrated in FIG. 3 and is further described in relation to FIG. 4-6 illustrating the steps of the proposed method.

**FIG. 3** illustrates an example mapping of the non-volatile memory of an integrated circuit according to an embodiment of the invention. This figure exemplifies the structure of the non-volatile memory NVM of FIG. 2.

In this particular example, it can be observed that the flag slots FS0-FSN consists of 8 bytes (the content of the flag slots are represented in hexadecimal on FIG. 3). However, no limitation is attached to the length of the flag slots, which may include less or more bytes. Similarly, this example illustrates a buffer area BA with 3 buffer sectors and a flag area FA with 4 flag slots, given by way of illustration only, not limitation.

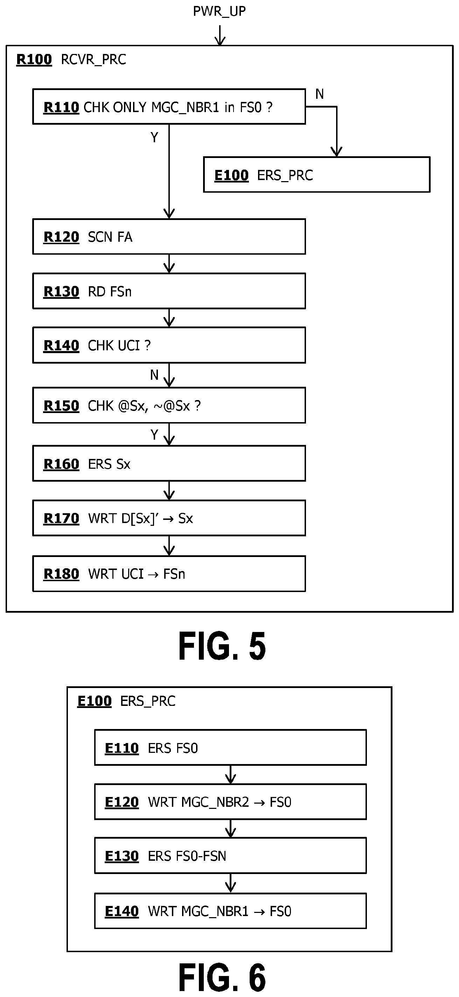

It should be noted that the first flag FS0 has a specific function. As illustrated on FIG. 3, the first flag slot FS0 is used to store two indicators MGC_NBR1 and MGC_NBR2. These indicators allow monitoring the erasure process of the flag slots FS1-FSN and thus verifying that the flag area FA is not corrupted. The use of these indicators is further detailed in relation to FIG. 6.

The others flag slots FS1-FSN are respectively associated to the buffer sectors BS1-BSN, each flag slot being used to save the address of a target memory sector. Accordingly, in an embodiment, the total number of flag slots FS0- FSN is equal to the number of buffer sectors BS1-BSN plus one.

We are to describe FIG. 3 in more details below in order to illustrate example embodiments of the proposed method.

The proposed method for writing data into the non-volatile memory NVM of the security SD device comprises according to an embodiment: a writing process W100; a recovery process R100; and an erasure process E100.

Namely, the writing process W100 is executed to update a target memory sector Sx with updating data. The recovery process R100 is executed on power-up of the integrated circuit IC to recover from a tearing event. If necessary, and if possible, the recovery process R100 completes an interrupted writing process W100. And, the erasure process E100 is executed to set the flag slots FS1-FSN into an erased state for subsequent executions of the writing process W100.

Each of these processes is respectively described in relation to FIG. 4-6. Note that the steps of the writing process are denoted by W1XX, the steps of the recovery process are denoted by R1XX, and the steps of the erasure process are denoted by E1XX.

**FIG. 4** illustrates steps of a writing process of a method for writing data in a non-volatile memory according to an embodiment of the invention.

According to an embodiment illustrated in FIG. 4, the proposed method comprises a writing process W100. This writing process W100 comprises at least one of the following steps W110 to W190 implemented by the processor PROC of the integrated circuit IC. The proposed method can also comprise a plurality of executions of the writing process W100.

The execution of the writing process W100 is in particular triggered by an update request UPD_RQS. Specifically, the update request UPD_RQS includes updating data D[UPD] to be written into the non-volatile memory NVM and the address @UPD of the first word from which the updating data is to be written. The update request UPD_RQS may be received from the reader RDR, or issued by the integrated circuit IC itself.

The writing process W100 is thus executed to update a target memory sector Sx of the memory sectors S1-SM with the updating data D[UPD]. We first describe a complete writing process W100 and, thereby, a successful update of the target memory sector Sx. Then, we will discuss the effects of a tearing event interrupting a writing process W100.

At step W110, the processor PROC obtains the address @Sx of the target memory sector Sx based on the address of the first word @UPD included in the update request UPD_RQS.

In fact, and as previously mentioned, the address of the first word @UPD includes the address @Sx of the sector Sx and the word offset. Accordingly, in an embodiment, the address @Sx of the target memory sector Sx is obtained using the following expression: @Sx = @UPD - MOD(@UPD, SS), wherein MOD is the modulo operator and SS is the size of a memory sector S1-SM.

At step W120, the processor PROC obtains the updated memory sector data D[Sx]' to be written into the target memory sector Sx based on the updating data D[UPD].

In the embodiment of FIG. 4, the updated memory sector data D[Sx]' are obtained based on the updating data D[UPD] and the initial sector data D[Sx] of the target memory sector Sx. Specifically, the processor PROC reads the initial sector data D[Sx] at the address @Sx, and caches it into the volatile memory RAM. Then, the processor PROC updates the initial sector data D[Sx] cached in the volatile memory RAM with the updating data D[UPD].

Alternatively, it could also be envisaged that the update request UPD_RQS is to update an entire target memory sector Sx, such that it is not necessary to read the initial sector data D[Sx] originally stored into the target memory sector Sx.

At step W130, the processor PROC verifies whether the flag slots from the second to the last FS1-FSN are filled. In other words, this step checks whether the flag slots FS1-FSN of the flag area FA are full (no availability of a flag slot in erased state (all bytes of the flag slot in erased state)).

If the result of the verification W130 is positive, the processor PROC triggers an execution of the erasure process E100 of the flag slots FS1-FSN, which is described below in relation to FIG. 6. After the execution of the erasure process E100, the method proceeds to step W140. Otherwise, if the result of the verification W130 is negative, the method directly proceeds to step W140.

At step W140, the processor PROC erases the current buffer sector BSn. In particular, in this step, the current buffer sector BSn with index n is erased such that its memory cells are set in an erased state.

At step W150, the processor PROC writes the updated memory sector data D[Sx]' of the target memory sector Sx into the current buffer sector BSn. Specifically, the processor PROC writes the updated memory sector data D[Sx]' from the volatile memory RAM to the current buffer sector BSn (which is in an erased state).

In the embodiment illustrated in FIG. 4, only the current buffer sector BSn is erased during the writing process W100. Alternatively, it could also be envisaged to pre-erase all of the buffer sectors BS1-BSN at once (i.e. once before multiple executions of the writing process). However, erasing all buffer sectors BS1-BSN at once can increase the risks of weak memory cell issues (i.e. worn-out unusable cells), which is prevented in this embodiment by erasing only the current buffer sector BSn when updating the target memory sector Sx. In addition, erasing only the current buffer sector BSn during the writing process is much faster than erasing all the buffer sectors BS1-BSN at once.

At step W160, the processor PROC writes the address @Sx of the target memory sector Sx into the current flag slot FSn associated with the current buffer sector BSn. In contrast to the buffer sector BSn, the current flag slot FSn is pre-erased. The erasure of the flag slots FS1-FSN is performed by the erasure process E100 and is described in relation to FIG. 6.

It should be noted that saving the address @Sx in the current flag slot FSn allows not only retrieving the address @Sx of the target memory sector Sx to be updated in case of a tearing event. In addition, the address @Sx being saved into the current flag slot FSn indicates that the updated memory sector data D[Sx]' has been backed-up into the current buffer BSn.

In a first particular embodiment, the processor PROC at step W160 not only writes the address @Sx of the target memory sector Sx into the current flag slot FSn, but also the one's complement ~@Sx of the address of the target memory sector Sx (i.e. its mirror image). This embodiment allows ensuring that the address @Sx saved in a flag slot is valid, by checking that the current flag slot FSn effectively stores the address @Sx and its one's complement ~@Sx.

It should be noted that FIG. 3 illustrates this particular embodiment. The flag slot FS1 includes a 2 bytes address 0008 (in hexadecimal) of a memory sector and its one's complement FFF7. It implies that the updated memory sector data to be written into the memory sector of address 0008 has been saved into the buffer sector BS1. Similarly, the flag slot FS2 includes a 2 bytes address 0010 of another memory sector and its one's complement FFEF.

In a second particular embodiment, if writing the address @Sx of the target memory sector Sx into the current flag slot FSn at step W160 triggers a hardware fault (e.g. due to a weak memory cell), then the writing process W100 proceeds as follows.

First, the processor PROC writes an updating completion indicator UCI into the current flag slot FSn and then increments index n. Thereby, the next flag slot is now used as the current flag slot, and similarly the next buffer sector is now used as the current buffer sector. Next, the writing process W100 continues by repeating step W140 and subsequent steps.

This particular embodiment allows handling a hardware fault (e.g. a weak memory cell) when writing the address @Sx of the target memory sector Sx. Thereby, it ensures that the address of the target memory sector is effectively saved in the flag slot and contributes to improving the reliability of the proposed solution for writing data into a non-volatile memory.

At step W170, the processor PROC erases the target memory sector Sx. In other words, the memory cells of the target memory sector Sx are set into an erased state.

At step W180, the processor PROC writes the updated memory sector data D[Sx]' into the target memory sector Sx. In particular, some memory cells of the target memory sector Sx are set into a programmed state such that the target memory sector Sx stores the updated memory sector data D[Sx]'.

At step W190, the processor PROC writes an updating completion indicator UCI into the current flag slot FSn. This indicator UCI indicates that the update of the target memory sector Sx has been completed.

Once the update of a target memory sector Sx is completed, the index n is incremented. In this way, the next flag slot will be used as the current flag slot for the next execution of the writing process W100, and similarly the next buffer sector will be used as the current buffer sector.

As illustrated on FIG. 3, the updating completion indicator UCI may be the following code 5A5A5A5A in hexadecimal. However, any other suitable representation may be used to represent the updating completion indicator UCI.

It should be noted that the proposed solution allows monitoring accurately the writing process W100 such that if a tearing event occurs, it is possible to determine with certainty whether the writing process W100 has been completed or not.

In addition, the proposed method ensures that if a tearing occurs during a writing process, the non-volatile memory NVM preserves either the initial data D[Sx] of the target memory sector Sx or the updated memory sector data D[Sx]'. Specifically, if a tearing event occurs before erasing the target memory sector Sx (step W170), then the initial data D[Sx] of the target memory sector Sx is preserved. And, if a tearing event occurs after saving the address @Sx of the target memory sector Sx (step W160), then the updated memory sector data D[Sx]' to be written in the target memory sector Sx is backed-up and can be restored.

For instance, in the example of FIG. 3, the flag slot FS1 includes: the address 0008 of a target memory sector; the one's complement of the address FFF7; and the updating completion indicator 5A5A5A5A. Accordingly, the update of the memory sector of address 0008 has been completed.

Differently, the flag slot FS2 includes the address 0010 of a memory sector and its one's complement FFEF, but no completion indicator UCI. It follows that the update of the memory sector of address 0010 has not been completed. Still, the updated memory sector data has been backed-up in the buffer sector BS2 and can be restored.

In particular, we describe below the recovery process R100 in relation to FIG. 4, which allows completing an interrupted update of a target memory sector, by restoring the updated memory sector data from the buffer sector into the target memory sector.

**FIG. 5** illustrates steps of a recovery process of a method for writing data in a non-volatile memory according to an embodiment of the invention.

According to the embodiment illustrated in FIG. 5, the proposed method comprises a recovery process R100. This recovery process R100 comprises at least one of the following steps R110 to R180 implemented by the processor PROC of the integrated circuit IC. The proposed method can comprise a plurality of executions of the recovery process R100.

The execution of the recovery process R100 is triggered by the integrated circuit IC powering-up PWR_UP (i.e. on power-on, start-up). The recovery process R100 is executed in view of recovering from a tearing event if necessary. In such case, and if possible, the recovery process R100 completes the last interrupted writing process W100.

At step R110, the processor PROC verifies if the first flag slot FS0 includes only an erasure completion indicator MGC_NBR1. Here, only an erasure completion indicator MGC_NBR1 means that the first flag slot FS0 contains only the value of the erasure completion indicator MGC_NBR1 and the remaining bytes are set to an erased state, for instance set to FF (hexadecimal). It also means that the erasure start indicator MGC_NBR2 must be in erased state, for instance a pattern of bytes set to FF (in hexadecimal format).

If the result of the verification R110 is negative, the processor PROC triggers the execution of the erasure process E100 described below in relation to FIG. 6. After the execution of the erasure process E100, the recovery process R100 terminates. Otherwise, if the result of the verification R110 is positive, the method proceeds to step R120.

In fact, if the first flag slot does not contain only the indicator MGC_NBR1, it implies that a tearing occurred during a previous execution of the erasure process E100 (i.e. uncomplete erasure process) or that the flag slots FS0-FSN have been corrupted. In such case, it is proposed here to trigger an execution of the erasure process E100 for setting the flag slots FS1-FSN into an erased state.

At step R120, the processor PROC scans the flag area FA to locate the current flag slot FSn of the last execution of the writing process W100. Specifically, the current flag slot FSn used in the last execution of the writing process W100 corresponds to the flag slot with the largest index and which is not in an erased state.

As previously indicated, each time the update of a target memory sector Sx is completed, the current flag slot FSn is moved to a next one (i.e. index n is incremented). It follows that scanning linearly the flag slots FS1-FSN to locate the flag slot with the largest index which is not entirely in an erased state allows identifying the most recently used flag slot.

We further describe the implementation of this step in reference to the example of FIG. 3. The processor PROC linearly scans the flag slots from FS1 to FS3 to locate the pattern FFFFFFFFFFFFFF in hexadecimal (i.e. a flag slot entirely in an erased state). For every 8 bytes scanned (i.e. every flag slot scanned), the index n is incremented. Once the flag slot FS3 with pattern FFFFFFFFFFFF is located, the index n is decremented. Thereby, the flag slot FS2 is located as the flag slot with the largest index and which is not entirely in an erased state. In the example FIG. 3, the flag slot FS2 is the one used in the last execution of the writing process W100.

At step R130, the processor PROC reads the current flag slot FSn used in the last execution of the writing process W100 includes an updating completion indicator UCI.

At step R140, the processor PROC verifies whether the current flag slot FSn includes an updating completion indicator UCI.

If the result of the verification at step R140 is positive, the recovery process R100 terminates. Indeed, if the current flag slot FSn includes an updating completion indicator UCI, it implies that the update of the target memory sector Sx has been completed. In other words, since the last writing process W100 has been completed, it is not necessary to restore the backed-up data.

Otherwise, if the result of the verification at step R140 is negative, then the method proceeds to step R150. If the flag slot FSn associated with the last writing process W100 includes no updating completion indicator UCI (UCI still in erased state and related bytes, each one, set to , for example, FF), it implies that the last writing process W100 has been interrupted (i.e. a tearing occurred).

At step R150, the processor PROC verifies whether the current flag slot FSn includes the address @Sx of the target memory sector Sx.

If the result of the verification at step R150 is positive, the recovery process R100 proceeds to steps R160-R180. Indeed, if the current flag slot FSn includes the address @Sx of the target memory sector Sx but no updating completion indicator UCI, it means that the last writing process W100 has been interrupted and that the updated memory sector data D[Sx]' have been backed-up into the buffer sector BSn. In such case, the recovery process R100 is to complete the update of the target memory sector Sx.

Otherwise, if the result of the verification at step R150 is negative, the recovery process R100 terminates. If the current flag slot FSn includes no updating completion indicator UCI and no valid address @Sx of the target memory sector, then the recovery process R100 cannot complete the interrupted update of the target memory sector Sx. Still, if the flag slot FSn includes an invalid address (i.e. is not in an erased state) and no updating completion indicator UCI, it implies that a tearing occurred during the writing of the address @Sx into the flag slot FSn (step W160). Accordingly, in such a case the initial sector data D[Sx] are preserved in the target memory sector Sx.

In a particular embodiment, the processor verifies at step R150 whether the current flag slot FSn comprises not only the address @Sx of the target memory sector Sx, but also its one's complement ~@Sx. A simple implementation of this verification consists in performing a XOR operation between the address @Sx and its one's complement ~@Sx saved in the flag slot FSn. If the result of the XOR operation yields only bits of value 1, the stored address is valid; otherwise, the address is erroneous or corrupted.

This particular embodiment ensures that the address @Sx saved in the flag slot FSn is valid and there is no weak cell, before restoring backed-up data. Thereby, this embodiment contributes to improving the reliability of the proposed method.

For instance, in the example FIG. 3, the flag slot FS2 of the last writing process W100 and includes the address 0010 and its one's complement FFEF, but no updating completion indicator 5A5A5A5A. It follows that the update of the sector of address 0010 has been interrupted and that the recovery process R100 is to complete this update by using the updated memory sector data backed-up in the buffer sector BS2.

At step R160, the processor PROC erases the target memory sector Sx.

At step R170, the processor PROC writes the updated memory sector data D[Sx]' into the target memory sector Sx, the updated memory sector data D[Sx]' being stored in the buffer sector BSn.

At step R180, the processor PROC writes an updating completion indicator UCI into the current flag slot FSn.

Thereby, the recovery process R100 allows restoring the content of the non-volatile memory following a tearing event.

**FIG. 6** illustrates steps of an erasure process of a method for writing data in a non-volatile memory according to an embodiment of the invention.

According to the embodiment illustrated in FIG. 6, the proposed method comprises an erasure process E100. This erasure process E100 comprises at least one of the following steps E110 to E140 implemented by the processor PROC of the integrated circuit IC. The proposed method can also comprise a plurality of executions of the erasure process E100.

The erasure process E100 is executed to set the flag slots FS1-FSN into an erased state for subsequent writing processes W100. As previously indicated, the execution of the erasure process E100 is triggered during the writing process W100 if the flag slots from the second to the last FS1-FSN are filled (i.e. the flag slots FS1-FSN of the flag area FA are full).

In addition, the execution of the erasure process E100 of the flag slots FS1-FSN is triggered during the recovery process R100 if the first flag slot FS0 does not includes only the erasure completion indicator MGC_NBR1 (i.e. the flag area is corrupted or the previous erasure process E100 has not been completed).

At step E110, the processor PROC erases the first flag slot FS0. In this way, this step erases the content previously stored in the first location FS0, if any and whatever it was (either only an erasure completion indicator MGC_NBR1, or either only an erasure start indicator MGC_NBR2, or either both of an erasure completion indicator MGC_NBR1 and of an erasure start indicator MGC_NBR2, or none of them).

At step E120, the processor PROC writes an erasure start indicator MGC_NBR2 into the first flag slot FS0. This indicator MGC_NBR2 indicates that the erasure process E100 has started. Alternatively, the step E110 isn't implemented, and the erasure process E100 begins directly by the step E120 (writing an erasure start indicator MGC_NBR2 into the first flag slot FS0).

At step E130, the processor PROC erases the flag slots FS0-FSN.

This step sets the flag slot FS0 into an erased state and the flag slots FS1-FSN into an erased state for future writing processes W100. Thereupon, during subsequent executions of the writing process W100, the flag slots FS1-FSN will be used for saving the address @Sx of the target memory sector Sx and the updating completion indicator UCI.

At step E140, the processor PROC writes an erasure completion indicator MGC_NBR1 into the first flag slot FS0. The erasure completion indicator MGC_NBR1 indicates that the erasure process E100 of the flag slots FS1-FSN has been completed. A successful erasure completion of the flag slots FS1-FSN implies that the flag slot FS0 contains only the erasure completion indicator MGC_NBR1. The flag slot FS0 containing only the erasure completion indicator MGC_NBR1 means also that the bytes into the flag slot FS0 representing the erasure start indicator MGC_NBR2 must be set on an erased state.

It should be noted that the erasure start indicator MGC_NBR2 and the erasure completion indicator MGC_NBR1 allows monitoring precisely the erasure process E100 of the flag slots FS1-FSN. These indicators allow determining with certainty whether a tearing event occurred during the erasure process E100 and, thus, whether it has been completed or not.

Indeed, if the first flag slot FS0 includes only the erasure start indicator MGC_NBR2 or includes both the erasure start indicator MGC_NBR2 and the erasure completion indicator MGC_NBR1 or includes none of them (neither the erasure start indicator MGC_NBR2 nor the erasure completion indicator MGC_NBR1), but not only the erasure completion indicator MGC_NBR1, it implies that the erasure process E100 has started but has been interrupted (i.e. a tearing event occurred or that the flag area has been corrupted, for instance due to a tearing).. In these cases, on the following power-up of the integrated circuit IC, the recovery process R100 is to trigger (step R110) the execution of the erasure process E100.

## Claims

1. A method for writing updating data (D[UPD]) into a non-volatile memory (NVM) of an integrated circuit (IC) of a security device (SD), the non-volatile memory (NVM) comprising memory sectors (S1-SM), buffer sectors (BS1-BSN) and flag slots (FS0-FSN), wherein the buffer sectors (BS1-BSN) and the flag slots (FS0-FSN) are linearly indexed, the buffer sectors (BS1-BSN) being respectively associated with flag slots (FS1-FSN), said method comprising:
- a writing process (W100) executed to update a target memory sector (Sx) of the memory sectors (S1-SM) with the updating data (D[UPD]), wherein the writing process (W100) comprises prior to updating the target memory sector (Sx):
∘ writing (W150) updated memory sector data (D[Sx]') of the target memory sector (Sx) into a current buffer sector (BSn) of the buffer sectors (BS1-BSN), the updated memory sector data (D[Sx]') of the target memory sector (Sx) being obtained (W120) based on the updating data (D[UPD]); and
∘ writing (W160) the address (@Sx) of the target memory sector (Sx) into a current flag slot (FSn) of the flag slots (FS1-FSN) associated with the current buffer sector (BSn).

2. The method according to claim 1, wherein the updating of the target memory sector (Sx) comprises:
- erasing (W170) the target memory sector (Sx);
- writing (W180) the updated memory sector data (D[Sx]') into the target memory sector (Sx); and
- writing (W190) an updating completion indicator (UCI) into the current flag slot (FSn).

3. The method according to claim 1 or 2, further comprising a recovery process (R100) executed upon the integrated circuit (IC) powering-up, wherein the recovery process (R100) comprises:
- verifying (R140-R150) whether the current flag slot (FSn) of the last writing process (W100) includes the address (@Sx) of the target memory sector (Sx) and no updating completion indicator (UCI); and
- if the result of this verification (R140, R150) is positive:
∘ erasing (R160) the target memory sector (Sx);
∘ writing (R170) the updated memory sector data (D[Sx]') into the target memory sector (Sx), the updated memory sector data (D[Sx]') being stored into the current buffer sector (BSn) associated to the current flag slot (FSn); and
∘ writing (R180) an updating completion indicator (UCI) into the current flag slot (FSn).

4. The method according to claim 3, wherein in the writing process (W100), the writing (W160) of the address (@Sx) of the target memory sector (Sx) comprises:
- writing the address (@Sx) of the target memory sector (Sx) and its one's complement (~@Sx) into the current flag slot (FSn),
and wherein in the recovery process (R100), the verifying (R140-R150) of whether the current flag slot (FSn) includes the address (@Sx) of the target memory sector (Sx) comprises:
- verifying whether the current flag slot (FSn) comprises the address (@Sx) of the target memory sector (Sx) and its one's complement (∼@Sx).

5. The method according to any of claims 1 to 4, wherein the writing process (W100) comprises:
- if the writing (W160) of the address (@Sx) of the target memory sector (Sx) into the current flag slot (FSn) triggers a fault:
∘ writing an updating completion indicator (UCI) into the current flag slot (FSn), a next flag slot (FSn+1) of the flag slots (FS1-FSN) and a next buffer sector (BSn+1) of the buffer sectors (BS1-BSN) being subsequently defined as the current flag slot (FSn) and the current buffer sector (BSn);
∘ writing the updated memory sector data (D[Sx]') of the target memory sector (Sx) into the current buffer sector (BSn); and
∘ writing (W160) the address (@Sx) of the target memory sector (Sx) into the current flag slot (FSn).

6. The method according to any of claims 1 to 5, further comprising an erasure process (E100) of the flag slots (FS1-FSN), wherein the erasure process (E100) comprises:
- writing (E120) an erasure start indicator (MGC_NBR2) into a first flag slot (FS0);
- erasing (E130) the flag slots (FS0-FSN); and
- writing (E140) an erasure completion indicator (MGC_NBR1) into the first flag slot (FS0).

7. The method according to claim 6, wherein the writing process (W100) comprises:
- verifying (W130) whether the flag slots from the second to the last (FS1-FSN) are filled; and
- if the result of this verification (W130) is positive, triggering an execution of the erasure process (E100).

8. The method according to any of claims 3 to 7, taken in their combination with claims 3 and 6, wherein the recovery process (E100) comprises:
- verifying (R110) if the first flag slot (FS0) includes only the erasure completion indicator (MGC_NBR1); and
- if the result of this verification (R110) is negative, triggering an execution of the erasure process (E100).

9. The method according to any of claims 1 to 8, wherein the writing process (W100) comprises, prior to the writing (W150) of the updated memory sector data (D[Sx]') into the current buffer sector (BSn): erasing (W140) only the current buffer sector (BSn).

10. The method according to any of claims 1 to 9, wherein upon writing (W190) an updating completion indicator (UCI) into the current flag slot (FSn), a next flag slot (FSn+1) of the flag slots (FS1-FSN) and a next buffer sector (BSn+1) of the buffer sectors (BS1-BSN) are defined as the current flag slot (FSn) and buffer sector (BSn) for a subsequent writing process (W100).

11. The method according any of claims 3 to 10, taken in their combination with claims 3 and 10, wherein the recovery process (R100) comprises: locating the current flag slot (FSn) of the last writing process (W100) by scanning (R120) linearly the flag slots (FS1-FSN), the current flag slot (FSn) being the flag slot with the largest index and which is not in an erased state or empty.

12. A security device (SD) comprising an integrated circuit (IC), wherein the integrated circuit (IC) comprises a processor (PROC) and a non-volatile memory (NVM) having stored thereon a program (PROG) for implementing the method according to any of claims 1 to 11.

13. A computer program (PROG) comprising instructions to implement the method according to any of claims 1 to 11, when the program (PROG) is executed by a processor (PROC).

14. A computer-readable medium (NVM) having stored thereon a computer program (PROG) comprising instructions to implement the method according to any of claims 1 to 11.

## Patentansprüche

1. Verfahren zum Schreiben von Aktualisierungsdaten (D[UPD]) in einen nichtflüchtigen Speicher (NVM) einer integrierten Schaltung (IC) einer Sicherheitsvorrichtung (SD), wobei der nichtflüchtige Speicher (NVM) Speichersektoren (S1 bis SM), Puffersektoren (BS1 bis BSN) und Flag-Slots (FS0 bis FSN) umfasst, wobei die Puffersektoren (BS1 bis BSN) und die Flag-Slots (FS0 bis FSN) linear indexiert sind, wobei die Puffersektoren (BS1 bis BSN) jeweils Flag-Slots (FS1 bis FSN) zugeordnet sind, wobei das Verfahren umfasst:
- einen Schreibprozess (W100), der ausgeführt wird, um einen Zielspeichersektor (Sx) der Speichersektoren (S1 bis SM) mit den Aktualisierungsdaten (D[UPD]) zu aktualisieren, wobei der Schreibprozess (W100) vor dem Aktualisieren des Zielspeichersektors (Sx) umfasst:
o Schreiben (W150) aktualisierter Speichersektordaten (D[Sx]') des Zielspeichersektors (Sx) in einen aktuellen Puffersektor (BSn) der Puffersektoren (BS1 bis BSN), wobei die aktualisierten Speichersektordaten (D[Sx]') des Zielspeichersektors (Sx) basierend auf den Aktualisierungsdaten (D[UPD]) erhalten (W120) werden; und
o Schreiben (W160) der Adresse (@Sx) des Zielspeichersektors (Sx) in einen aktuellen Flag-Slot (FSn) der Flag-Slots (FS1 bis FSN), die dem aktuellen Puffersektor (BSn) zugeordnet sind.

2. Verfahren nach Anspruch 1, wobei das Aktualisieren des Zielspeichersektors (Sx) umfasst:
- Löschen (W170) des Zielspeichersektors (Sx);
- Schreiben (W180) der aktualisierten Speichersektordaten (D[Sx]') in den Zielspeichersektor (Sx) und
- Schreiben (W190) eines Aktualisierungsabschlussindikators (UCI) in den aktuellen Flag-Slot (FSn).

3. Verfahren nach Anspruch 1 oder 2, das ferner einen Wiederherstellungsprozess (R100) umfasst, der beim Einschalten der integrierten Schaltung (IC) ausgeführt wird, wobei der Wiederherstellungsprozess (R100) umfasst:
- Verifizieren (R140 bis R150), ob der aktuelle Flag-Slot (FSn) des letzten Schreibprozesses (W100) die Adresse (@Sx) des Zielspeichersektors (Sx) und keinen Aktualisierungsabschlussindikator (UCI) einschließt; und
- wenn das Ergebnis dieser Verifizierung (R140, R150) positiv ist:
o Löschen (R160) des Zielspeichersektors (Sx);
o Schreiben (R170) der aktualisierten Speichersektordaten (D[Sx]') in den Zielspeichersektor (Sx), wobei die aktualisierten Speichersektordaten (D[Sx]') im aktuellen Puffersektor (BSn), der dem aktuellen Flag-Slot (FSn) zugeordnet ist, gespeichert werden; und
o Schreiben (R180) eines Aktualisierungsabschlussindikators (UCI) in den aktuellen Flag-Slot (FSn).

4. Verfahren nach Anspruch 3, wobei in dem Schreibprozess (W100) das Schreiben (W160) der Adresse (@Sx) des Zielspeichersektors (Sx) umfasst:
- Schreiben der Adresse (@Sx) des Zielspeichersektors (Sx) und seines Komplements (∼@Sx) in den aktuellen Flag-Slot (FSn),
und wobei in dem Wiederherstellungsprozess (R100) das Verifizieren (R140 bis R150), ob der aktuelle Flag-Slot (FSn) die Adresse (@Sx) des Zielspeichersektors (Sx) einschließt, umfasst:
- Verifizieren, ob der aktuelle Flag-Slot (FSn) die Adresse (@Sx) des Zielspeichersektors (Sx) und seines Komplements (~@Sx) umfasst.

5. Verfahren nach einem der Ansprüche 1 bis 4, wobei der Schreibprozess (W100) umfasst:
- wenn das Schreiben (W160) der Adresse (@Sx) des Zielspeichersektors (Sx) in den aktuellen Flag-Slot (FSn) einen Fehler auslöst:
o Schreiben eines Aktualisierungsabschlussindikators (UCI) in den aktuellen Flag-Slot (FSn), wobei anschließend ein nächster Flag-Slot (FSn+1) der Flag-Slots (FS1 bis FSN) und ein nächster Puffersektor (BSn+1) der Puffersektoren (BS1 bis BSN) als der aktuelle Flag-Slot (FSn) und der aktuelle Puffersektor (BSn) definiert werden;
o Schreiben der aktualisierten Speichersektordaten (D[Sx]') des Zielspeichersektors (Sx) in den aktuellen Puffersektor (BSn) und
o Schreiben (W160) der Adresse (@Sx) des Zielspeichersektors (Sx) in den aktuellen Flag-Slot (FSn).

6. Verfahren nach einem der Ansprüche 1 bis 5, das ferner einen Löschprozess (E100) der Flag-Slots (FS1 bis FSN) umfasst, wobei der Löschprozess (E100) umfasst:
- Schreiben (E120) eines Löschstartindikators (MGC_NBR2) in einen ersten Flag-Slot (FS0);
- Löschen (E130) der Flag-Slots (FS0 bis FSN) und
- Schreiben (E140) eines Löschabschlussindikators (MGC_NBR1) in den ersten Flag-Slot (FS0).

7. Verfahren nach Anspruch 6, wobei der Schreibprozess (W100) umfasst:
- Verifizieren (W130), ob die Flag-Slots vom zweiten bis zum letzten (FS1 bis FSN) gefüllt sind; und
- wenn das Ergebnis dieser Verifizierung (W130) positiv ist, Auslösen einer Ausführung des Löschprozesses (E100).

8. Verfahren nach einem der Ansprüche 3 bis 7, in jeweiliger Kombination mit Ansprüchen 3 und 6, wobei der Wiederherstellungsprozess (E100) umfasst:
- Verifizieren (R110), ob der erste Flag-Slot (FS0) nur den Löschabschlussindikator (MGC_NBR1) einschließt; und
- wenn das Ergebnis dieser Verifizierung (R110) negativ ist, Auslösen einer Ausführung des Löschprozesses (E100).

9. Verfahren nach einem der Ansprüche 1 bis 8, wobei der Schreibprozess (W100) vor dem Schreiben (W150) der aktualisierten Speichersektordaten (D[Sx]') in den aktuellen Puffersektor (BSn) umfasst: Löschen (W140) nur des aktuellen Puffersektors (BSn).

10. Verfahren nach einem der Ansprüche 1 bis 9, wobei beim Schreiben (W190) eines Aktualisierungsabschlussindikators (UCI) in den aktuellen Flag-Slot (FSn) ein nächster Flag-Slot (FSn+1) der Flag-Slots (FS1 bis FSN) und ein nächster Puffersektor (BSn+1) der Puffersektoren (BS1 bis BSN) als der aktuelle Flag-Slot (FSn) und Puffersektor (BSn) für einen nachfolgenden Schreibprozess (W100) definiert werden.

11. Verfahren nach einem der Ansprüche 3 bis 10, in jeweiliger Kombination mit Ansprüchen 3 und 10, wobei der Wiederherstellungsprozess (R100) umfasst: Lokalisieren des aktuellen Flag-Slots (FSn) des letzten Schreibprozesses (W100) durch lineares Abtasten (R120) der Flag-Slots (FS1 bis FSN), wobei der aktuelle Flag-Slot (FSn) der Flag-Slot ist, der den größten Index aufweist und der nicht in einem gelöschten Zustand oder leer ist.

12. Sicherheitsvorrichtung (SD), die eine integrierte Schaltung (IC) umfasst, wobei die integrierte Schaltung (IC) einen Prozessor (PROZ) und einen nichtflüchtigen Speicher (NVM), auf dem ein Programm (PROG) zum Implementieren des Verfahrens nach einem der Ansprüche 1 bis 11 gespeichert ist, umfasst.

13. Computerprogramm (Computer-PROG), das Anweisungen zum Implementieren des Verfahrens nach einem der Ansprüche 1 bis 11 umfasst, wenn das Programm (PROG) durch einen Prozessor (PROZ) ausgeführt wird.

14. Computerlesbares Medium (NVM), auf dem ein Computerprogramm (Computer-PROG) gespeichert ist, das Anweisungen zum Implementieren des Verfahrens nach einem der Ansprüche 1 bis 11 umfasst.

## Revendications

1. Procédé d'écriture de données de mise à jour (D[UPD]) dans une mémoire non volatile (NVM) d'un circuit intégré (IC) d'un dispositif de sécurité (SD), la mémoire non volatile (NVM) comprenant des secteurs mémoire (S1-SM), des secteurs tampon (BS1-BSN) et des emplacements de drapeau (FS0-FSN), dans lequel les secteurs tampon (BS1-BSN) et les emplacements de drapeau (FS0-FSN) sont indexés linéairement, les secteurs tampon (BS1-BSN) étant respectivement associés à des emplacements de drapeau (FS1-FSN), ledit procédé comprenant :
- un processus d'écriture (W100) exécuté pour mettre à jour un secteur mémoire cible (Sx) des secteurs de mémoire (S1-SM) avec les données de mise à jour (D[UPD]), dans lequel le processus d'écriture (W100) comprend, préalablement à la mise à jour du secteur mémoire cible (Sx), les étapes suivantes :
o écrire (W150) des données de secteur mémoire actualisées (D[Sx]') du secteur mémoire cible (Sx) dans un secteur tampon courant (BSn) des secteurs tampon (BS1-BSN), les données de secteur mémoire mises à jour (D[Sx]') du secteur mémoire cible (Sx) étant obtenues (W120) sur la base des données de mise à jour (D[UPD]) ; et
o écrire (W160) l'adresse (@SX) du secteur mémoire cible (Sx) dans un emplacement de drapeau courant (FSn) des emplacements de drapeau (FS1-FSN) associés au secteur tampon courant (BSn).

2. Procédé selon la revendication 1, dans lequel la mise à jour du secteur mémoire cible (Sx) comprend les étapes suivantes :
- effacer (W170) le secteur mémoire cible (Sx) ;
- écrire (W180) les données de secteur mémoire mises à jour (D[Sx]') dans le secteur mémoire cible (Sx) ; et
- écrire (W190) un indicateur d'achèvement de la mise à jour (UCI) dans l'emplacement de drapeau courant (FSn).

3. Procédé selon la revendication 1 ou la revendication 2, comprenant en outre un processus de récupération (R100) exécuté lors de la mise sous tension du circuit intégré (IC), le processus de récupération (R100) comprenant les étapes suivantes :
- vérifier (R140-R150) si l'emplacement de drapeau courant (FSn) du dernier processus d'écriture (W100) comporte l'adresse (@SX) du secteur mémoire cible (Sx) et aucun indicateur d'achèvement de la mise à jour (UCI) ; et
- si le résultat de cette vérification (R140, R150) est positif :
o effacer (R160) le secteur mémoire cible (Sx) ;
o écrire (R170) les données de secteur mémoire mises à jour (D[Sx]') dans le secteur mémoire cible (Sx), les données de secteur mémoire mises à jour (D[Sx]') étant stockées dans le secteur tampon courant (BSn) associé à l'emplacement de drapeau courant (FSn) ; et
o écrire (R180) un indicateur d'achèvement de mise à jour (UCI) dans l'emplacement de drapeau courant (FSn).

4. Procédé selon la revendication 3, dans lequel, lors du processus d'écriture (W100), l'écriture (W160) de l'adresse (@SX) du secteur mémoire cible (Sx), comprend l'étape suivante :
- écrire l'adresse (@SX) du secteur mémoire cible (Sx) et de son complément (~@SX) dans l'emplacement de drapeau courant (FSn),
et dans lequel, dans le procédé de récupération (R100), la vérification (R140-R150) du fait que l'emplacement de drapeau courant (FSn) comporte l'adresse (@SX) du secteur mémoire cible (Sx) comprend l'étape suivante :
- vérifier si l'emplacement de drapeau courant (FSn) comprend l'adresse (@Sx) du secteur mémoire cible (Sx) et son complément (~@Sx).

5. Procédé selon l'une quelconque des revendications 1 à 4, dans lequel le processus d'écriture (W100) comprend les étapes suivantes :
- si l'écriture (W160) de l'adresse (@Sx) du secteur mémoire cible (Sx) dans l'emplacement de drapeau courant (FSn) déclenche un défaut :
o écrire un indicateur d'achèvement de mise à jour (UCI) dans l'emplacement de drapeau courant (FSn), un prochain emplacement de drapeau (FSn+1) des emplacements de drapeau (FS1-FSN) et un prochain secteur tampon (BSn+1) des secteurs tampon (BS1-BSN) étant ensuite définis comme emplacement de drapeau courant (FSn) et secteur tampon courant (BSn),
o écrire les données de secteur mémoire mises à jour (D[Sx]') du secteur mémoire cible (Sx) dans le secteur tampon courant (BSn) ; et
o écrire (W160) l'adresse (@Sx) du secteur mémoire cible (Sx) dans l'emplacement de drapeau courant (FSn).

6. Procédé selon l'une quelconque des revendications 1 à 5, comprenant en outre un processus d'effacement (E100) des emplacements de drapeau (FS1-FSN), le processus d'effacement (E100) comprenant les étapes suivantes :
- écrire (E120) un indicateur de début d'effacement (MGC_NBR2) dans un premier emplacement de drapeau (FS0) ;
- effacer (E130) les emplacements de drapeau (FS0-FSN) ; et
- écrire (E140) un indicateur de fin d'effacement (MGC_NBR1) dans le premier emplacement de drapeau (FS0).

7. Procédé selon la revendication 6, dans lequel le processus d'écriture (W100) comprend les étapes suivantes :
- vérifier (W130) si les emplacements de drapeau du deuxième au dernier (FS1-FSN) sont remplis ; et
- si le résultat de cette vérification (W130) est positif, déclencher une exécution du processus d'effacement (E100).

8. Procédé selon l'une quelconque des revendications 3 à 7, prises dans leur combinaison avec les revendications 3 et 6, le processus de récupération (E100) comprenant les étapes suivantes :
- vérifier (R110) si le premier emplacement de drapeau (FS0) comporte uniquement l'indicateur d'achèvement d'effacement (MGC_NBR1) ; et
- si le résultat de cette vérification (R110) est négatif, déclencher une exécution du processus d'effacement (E100).

9. Procédé selon l'une quelconque des revendications 1 à 8, dans lequel le processus d'écriture (W100) comprend, avant l'écriture (W150) des données de secteur mémoire mises à jour (D[Sx]') dans le secteur tampon courant (BSn) : l'effacement (W140) seulement du secteur tampon courant (BSn).

10. Procédé selon l'une quelconque des revendications 1 à 9, dans lequel, lors de l'écriture (W190) d'un indicateur d'achèvement de mise à jour (UCI) dans l'emplacement de drapeau courant (FSn), un emplacement de drapeau suivant (FSn+1) des emplacements de drapeau (FS1-FSN) et un secteur tampon suivant (BSn+1) des secteurs tampon (BS1-BSN) sont définis comme emplacement de drapeau courant (FSn) et secteur tampon (BSn) pour un processus d'écriture ultérieur (W100).

11. Procédé selon l'une quelconque des revendications 3 à 10, prises en combinaison avec les revendications 3 et 10, dans lequel le processus de récupération (R100) comprend : la localisation de l'emplacement de drapeau courant (FSn) du dernier processus d'écriture (W100) en balayant (R120) linéairement les emplacements de drapeau (FS1-FSN), l'emplacement de drapeau courant (FSn) étant l'emplacement de drapeau ayant le plus grand index et qui n'est pas dans un état effacé ou vide.

12. Dispositif de sécurité (SD) comprenant un circuit intégré (IC), le circuit intégré (IC) comprenant un processeur (PROC) et une mémoire non volatile (NVM) sur laquelle est stocké un programme (PROG) pour mettre en œuvre le procédé selon l'une quelconque des revendications 1 à 11.

13. Programme informatique (PROG) comprenant des instructions pour mettre en œuvre le procédé selon l'une quelconque des revendications 1 à 11, lorsque le programme (PROG) est exécuté par un processeur (PROC).

14. Support lisible par ordinateur (NVM) sur lequel est stocké un programme informatique (PROG) comprenant des instructions pour mettre en œuvre le procédé selon l'une quelconque des revendications 1 à 11.
